# EUROPEAN PATENT APPLICATION

(11) **EP 2 204 705 A1**
(43) Date of publication of application: **07.07.2010**
(21) Application number: 09179419.8
(22) Date of filing: 16.12.2009
(51) Int. Cl.: G05B 19/042, G05B 19/05, G05B 19/4063, G05B 23/02, G06F 3/048, G05B 19/409

(54) **Context switching zooming user interface**

(30) Priority: 06.01.2009 US 349218
(71) Applicant: General Electric Company, Schenectady, NY 12345 (US)
(72) Inventor: Williams, Scott Terrell, Minden, NV 89423 (US)
(74) Representative: Gray, Thomas

(57) **Abstract**

A diagnostic system 10 includes a display module 22 that displays an icon view and one or more sensor views. The icon view includes icons that represent associated processes and the sensor views include sensor data that is associated with respective ones of the processes. A processor module 24receives the sensor data from sensors 14. A human interface device communicates with the processor module and includes a pointing device. The pointing device facilitates selecting one of the icons and zooming the icon view to switch from the icon view to its associated sensor view.

## Description

The subject matter disclosed herein relates to human interfaces in a graphical computing environment.

Computer systems are employed to engineer and diagnose various control systems. By way of non-limiting example, these control systems can include chemical processing plants, power plants, heating plants, metal smelting and forming plants, and an almost unlimited spectrum of other applications.

Each control system employs a set of interconnected components that perform associated functions. By way of non-limiting example, these components include items such as motors, pumps, heaters, chillers, and so forth. Each component may also be associated with one or more sensors that provide data regarding the component's performance. By way of non-limiting example, the sensor data may represent voltages, pressures, flow rates, temperatures, and so forth.

The computer systems may be employed to graphically depict the control system. In a typical application, each component is represented by an icon image. Lines connect the icons and represent various signals, fluids, and so forth that flow between the components. A pointing device, such as a computer mouse, may be employed to select each icon. Once an icon is selected then a menu can be used to access graphical depictions of the sensor data that is associated with the selected icon.

According to one aspect of the invention, a diagnostic system is disclosed. The diagnostic system includes a display module that displays an icon view and one or more sensor views. The icon view includes icons that represent associated processes and the sensor views include sensor data that is associated with respective ones of the processes. A processor module receives the sensor data from sensors. A human interface device communicates with the processor module and includes a pointing device. The pointing device facilitates selecting one of the icons and zooming the icon view to switch from the icon view to its associated sensor view.

According to another aspect of the invention, a method of operating a diagnostic system is disclosed. The method includes displaying an icon view and one or more sensor views. The icon view includes icons that represent associated processes and the sensor views include sensor data that is associated with respective ones of the processes. The method also includes receiving the sensor data from sensors; selecting one of the icons; and zooming the icon view to switch from the icon view to its associated sensor view.

According to yet another aspect of the invention, a diagnostic system is disclosed. The diagnostic system includes means for displaying an icon view and one or more sensor views. The icon view includes icons that represent associated processes and the sensor views include sensor data that is associated with respective ones of the processes. The system also includes means for receiving the sensor data from sensors and means for communicating with the means for receiving. The means for communicating also provide means for facilitating selecting one of the icons and zooming the icon view to switch from the icon view to its associated sensor view.

These and other advantages and features will become more apparent from the following description taken in conjunction with the drawings.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a functional block diagram of a control system;
FIG. 2 is a functional block diagram of a graphical diagnostic system that receives and displays data from the control system;
FIGs. 3 and 4 are respective plan views of a mouse and a digitizing tablet;
FIG. 5 is a flowchart of a context switching zooming interface;
FIG. 6 is a screen image of a control system model that includes icons; and
FIG. 7 is a screen image of sensor data.

The detailed description explains embodiments of the invention, together with advantages and features, by way of example with reference to the drawings.

The following description is merely exemplary in nature and is in no way intended to limit the disclosure, its application, or uses. For purposes of clarity, the same reference numbers will be used in the drawings to identify similar elements. As used herein, the phrase at least one of A, B, and C should be construed to mean a logical (A or B or C), using a non-exclusive logical or. It should be understood that steps within a method may be executed in different order without altering the principles of the present disclosure.

As used herein, the term module refers to an Application Specific Integrated Circuit (ASIC), an electronic circuit, a processor (shared, dedicated, or group) and memory that execute one or more software or firmware programs, a combinational logic circuit, and/or other suitable components that provide the described functionality.

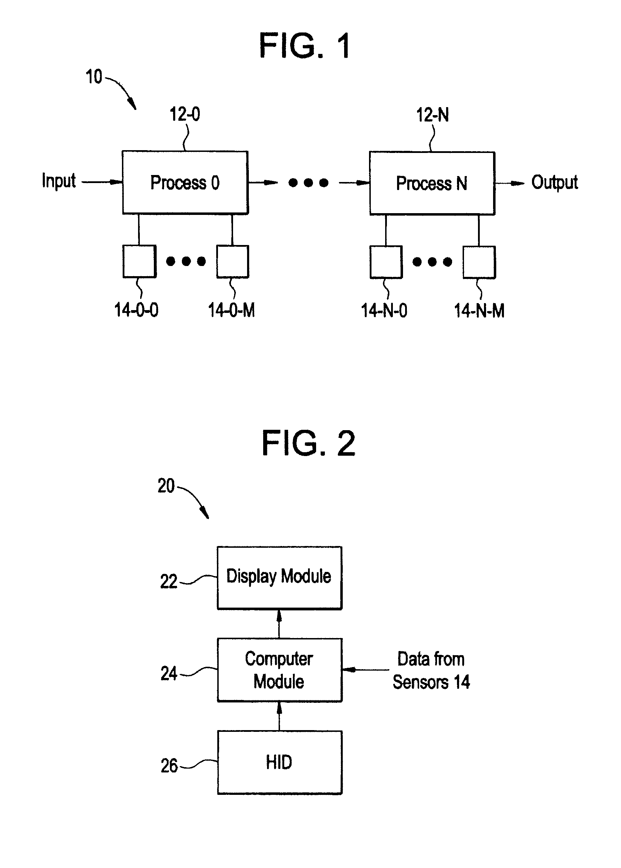

Referring now to FIG. 1 a functional block diagram is shown of a generic control system 10. Control system 10 receives an input and produces an output. By way of non-limiting examples, the inputs and associated outputs may include crude oil and gasoline, chemicals and medicine, and so forth. Control system 10 includes one or more processes 12-0....12-N, which are collectively referred to as processes 12. N is an integer greater than or equal to zero. Each process 12 can include one or more pieces of equipment that perform associated steps such as pumping, heating, shaking, expanding, mixing, and the like.

Each process 12 may also be associated with one or more sensor modules 14-0-0, ..., 14-0-M, ..., 14-N-0, ..., 14-N-M, which are collectively referred to as sensors 14. M is an integer greater than or equal to zero. Each sensor module 14 generates a signal that represents one or more physical properties of its associated process 12. Examples of physical properties include, by way of non-limiting examples, items such as voltage, temperature, current, vibration, displacement, and the like. Described below is a diagnostic system 20 (best shown in FIG. 2) which allows context switching between viewing a graphical representation or icon view of control system 10 and the data from sensors 14. The context switching obviates traversing a menu and therefore saves time and effort when compared to the prior art.

Referring now to FIG. 2, a functional block diagram is shown of a diagnostic system 20. Diagnostic system 20 includes a display module 22, a processor module 24, and a human interface device (HID) 26. Display module 22 may be implemented with a computer monitor such as a cathode ray tube (CRT), liquid crystal display (LCD) monitor, and the like. HID 26 may be implemented with a keyboard and/or a pointing device such as a mouse, thumbwheel, touch screen, digitizing pad, and the like.

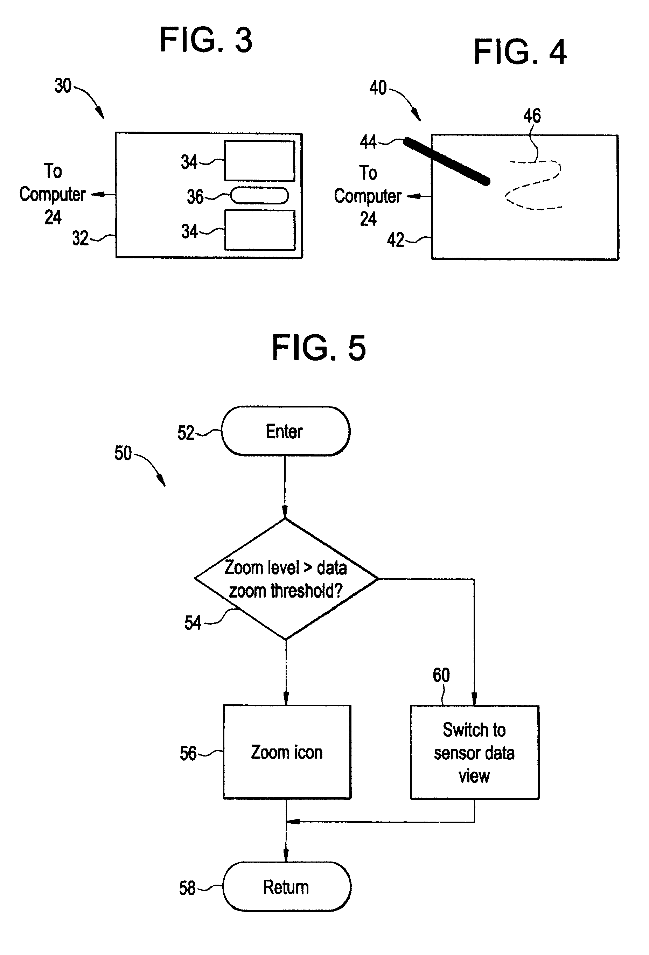

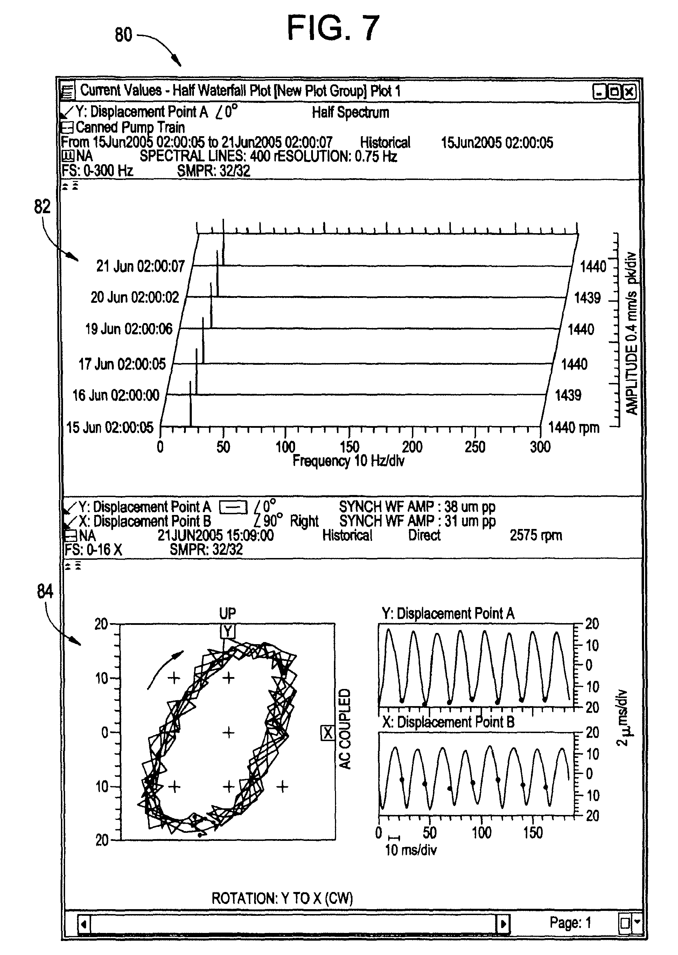

Processor module 24 receives the data from sensors 14. It should be appreciated that the sensor data may be communicated directly from the sensors and/or communicated as data via a network communication link. Processor module 24 also stores data that represents control system 10. The data includes icons 72 (best shown in FIG. 5) that represent associated processes 12. Processor module 24 communicates with display module 22. Display module 22 displays an icon view 70 that includes icons 72. Display module 22 also displays a sensor view that includes sensor data 82, 84 (best shown in FIG. 7) from sensors 14. Processor module 24 switches the displayed information between icon view 70 and sensor data view 80 based on a zooming command input from HID 26.

Referring now to FIGs. 3 and 4, a mouse 30 and a digitizing table 40 are shown, respectively. Mouse 30 and digitizing tablet 40 are pointing devices that may be employed by HID 26. Mouse 30 and digitizing tablet 40 may be used to select and zoom in and out on an icon 72 that is displayed on display module 22. In some embodiments an icon 72 can be selected by using mouse 30 or digitizing tablet 40 to simply position a cursor at the desired icon 72. In other embodiments positioning the cursor on the desired icon 72 and then clicking a mouse button 34 or making a predetermined motion with digitizing tablet 40 can select the desired icon 72.

In FIG. 3, mouse 30 includes one or more buttons 34 that may be pressed to select or highlight an icon 72. A scroll wheel 36 may be employed to zoom in and out on the selected icon 72. As mouse body 32 is moved across a surface, such as a mouse pad or desktop, a communication module within the mouse communicates the motion to processor module 24. Processor module 24 moves the cursor on display module 22 accordingly. It should be appreciated that mouse 30 may also be implemented as a thumbwheel design as is known in the art.

In FIG. 4, digitizing pad 40 includes a digitizing surface 42 and a wand 44. Digitizing surface 42 communicates to processor module 24 the movement and/or position of wand 44 as it is moved across digitizing surface 42. Processor module 24 moves the cursor on display module 22 accordingly. It should be appreciated that wand 44 may be elongated such as a pen or stylus or it may be formed similar to a typical computer mouse. Wand 44 may be moved in a predetermined pattern 46 to zoom the selected icon.

Referring now to FIG. 5, a method 50 provides a context sensitive method of switching the image displayed on display module 22 between icon view 70 and its associated sensor data view 80. Method 50 may be implemented as computer instructions that are encoded on a computer readable medium such as solid state memory, magnetic media, optical media, and the like. The computer instructions may be executed by processor module 24. Method 50 may be executed when an icon 72 has been selected or highlighted and the user employs the pointing device of HID 26 to zoom in on the selected icon 72.

Method 50 enters at block 52 and immediately proceeds to decision block 54. In decision block 54 control compares the present zoom level to a predetermined zoom level. The zoom level describes a ratio between the displayed size of the selected icon 72 vs. a native size of the selected icon 72. For example if the selected icon 72 has a native size of 100x100 pixels and the displayed size is 200x200 pixels, then the zoom level is 200%.

If the present zoom level is less than the predetermined zoom threshold then control branches to block 56. In block 56 control increases the displayed size of the selected icon 72 in accordance with the present zoom level. Control then returns to other processes via block 58.

On the other hand, if the present zoom level is greater than the predetermined zoom threshold in decision block 54, then control branches to block 60. In block 60 control switches the image displayed on display module 22 from icon view 70 to sensor data view 80. This allows the user to seamlessly switch between the icon and sensor data views without needing to select from a menu.

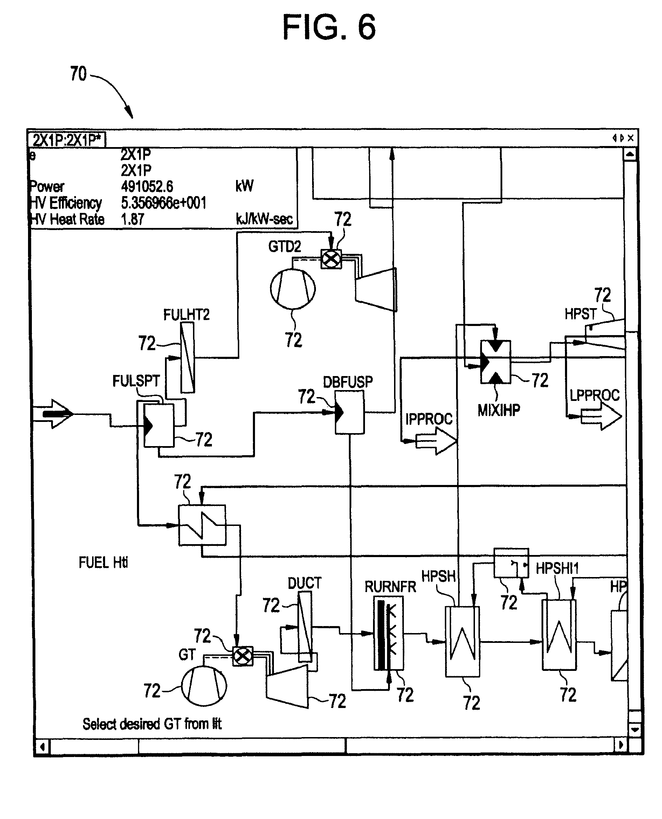

Referring now to FIG. 6, an example is shown of an icon view 70. Icon view 70 appears on display module 22 and includes one or more icons 72 that represent associated processes 12 (best shown in FIG. 1). When the pointing device is used to select or highlight an icon 72, then the zooming motion of the pointing device and method 50 allow the user to seamlessly switch between icon view 70 and sensor data view 80.

Referring now to FIG. 7, sensor data view 80 is shown. Sensor data view 80 appears on display module 22 and provides one or more of graphs, sensor values, and the like. The information that is displayed may be predetermined by the user and be unique for each icon 72. In the depicted example, a first graph 82 shows vibration amplitudes and frequency from vibration sensors 14 that are positioned in a process 12 associated with a selected icon 72. The amplitude and frequency data is plotted over a six-day period. It should be appreciated that other arbitrary time periods may be used as well. A second set of graphs 84 shows vibration data from vibration sensors 14. Graphs 84 depict the amplitudes and periods of the vibration data as well as the phase relationship between them.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A diagnostic system (20), comprising:
a display module (22) that displays an icon view and one or more sensor views, the icon view including icons that represent associated processes and the sensor views include sensor data that is associated with respective ones of the processes;
a processor module (24) that receives the sensor data from sensors (14); and
a pointing device (30) that communicates with the processor module and facilitates selecting one of the icons and zooming the icon view to switch from the icon view to its associated sensor view.

2. The diagnostic system (20) of claim 1, wherein the processor module (24) switches between the icon view and the sensor view based on comparing a zoom level in the icon view to a predetermined zoom threshold.

3. The diagnostic system (20) of any preceding claim, wherein the pointing device (30) is one of a mouse and a digitizing pad.

4. The diagnostic system (20) of any preceding claim, wherein the mouse (30) includes a scroll wheel and the digitizing pad includes a wand and a digitizing surface.

5. The diagnostic system (20) of any preceding claim, wherein the sensor views include at least one of a graph and a numerical value.

6. The diagnostic system (20) of any preceding claim, wherein the display module (22) includes one of a liquid crystal display and a cathode ray tube.

7. A method (50) of operating a diagnostic system (20), comprising:
displaying an icon view and one or more sensor views, the icon view including icons that represent associated processes and the sensor views including sensor data that is associated with respective ones of the processes;
receiving the sensor data from sensors (14);
selecting one of the icons; and
zooming the icon view to switch from the icon view to its associated sensor view.

8. The method (50) of claim 7 further comprising comparing a zoom level in the icon view to a predetermined zoom threshold and switching between the icon view and the sensor view based on the comparison.

9. The method (50) of claim 7 or claim 8, further comprising performing the zooming via one of a mouse (30) and a digitizing pad.

10. The method (50) of claim 9, wherein zooming via the mouse includes scrolling a scroll wheel and wherein zooming via the digitizing pad includes motioning a wand in a predetermined pattern over a digitizing surface.

11. The method (50) of any of claims 7 to 10, wherein the sensor views include at least one of a graph and a numerical value.

12. The method (50) of any of claims 7 to 11, wherein displaying the icon view and one or more sensor views includes displaying the icons and sensor data one of a liquid crystal display and a cathode ray tube.

13. A diagnostic system (20), comprising:
means for displaying an icon view and one or more sensor views, the icon view including icons that represent associated processes and the sensor views including sensor data that is associated with respective ones of the processes;
means for receiving the sensor data from sensors (14); and
means for facilitating selecting one of the icons and zooming the icon view to switch from the icon view to its associated sensor view.

14. The diagnostic system (20) of Claim 13 wherein the means for displaying switches between the icon view and the sensor view based on comparing a zoom level in the icon view to a predetermined zoom threshold.
